# EUROPÄISCHE PATENTSCHRIFT

(11) **EP 0 834 722 B1**
(45) Veröffentlichungstag und Bekanntmachung des Hinweises auf die Patenterteilung: **02.02.2011**
(21) Anmeldenummer: 97109196.2
(22) Anmeldetag: 06.06.1997
(51) Int. Cl.: G01F 23/284, H01Q 13/24

(54) **Mit Mikrowellen arbeitendes Füllstandsmessgerät**
Microwave level measuring apparatus
Appareil de mesure de niveau à microondes

(30) Priorität: 04.10.1996 DE 19641036
(43) Veröffentlichungstag der Anmeldung: 08.04.1998
(73) Patentinhaber: Endress + Hauser GmbH + Co. KG, 79689 Maulburg (DE)
(72) Erfinder: Oberle, Klaus-Peter, 79809 Weilheim (DE); Eckert, Manfred, 79674 Todtnau (DE)

(56) Entgegenhaltungen:
- DE-A- 4 405 855
- DE-A- 19 617 963
- DE-U- 9 412 243
- GB-A- 2 188 784
- US-A- 3 128 467
- K.K.S. JAMWAL ET AL: "Impedance Characteristics of Polymer Circular & Rectangular Antennas Operated in X-Band" INDIAN JOURNAL OF RADIO & SPACE PHYSICS, Bd. 10, Nr. 5, Oktober 1981, INDIA, Seiten 182-185, XP002062595

## Beschreibung

Die Erfindung betrifft ein mit Mikrowellen arbeitendes, auf einem Behälter zu befestigendes Füllstandsmeßgerät, mit einem Gehäuse und einer stabförmigen Antenne, die in den Behälter weist und die aus einem Dielektrikum, insb. aus Polytetrafluorethylen (PTFE) oder aus Polyphenylensulfid (PPS), besteht.

Bei der Füllstandsmessung werden Mikrowellen mittels einer Antenne zur Oberfläche eines Füllguts gesendet und die an der Oberfläche reflektierten Echowellen empfangen. Es wird eine die Echoamplituden als Funktion der Entfernung darstellende Echofunktion gebildet, aus der das wahrscheinliche Nutzecho und dessen Laufzeit bestimmt werden. Aus der Laufzeit wird der Abstand zwischen der Füllgut-Oberfläche und der Antenne bestimmt.

Es können alle bekannten Verfahren angewendet werden, die es ermöglichen, verhältnismäßig kurze Entfernungen mittels reflektierter Mikrowellen zu messen. Die bekanntesten Beispiele sind das Pulsradar und das Frequenzmodulations-Dauerstrichradar (FMCW-Radar).

Beim Pulsradar werden periodisch kurze Mikrowellen-Sendeimpulse, im folgenden als Wellenpakete bezeichnet, gesendet, die von der Füllgut-Oberfläche reflektiert und nach einer abstandsabhängigen Laufzeit wieder empfangen werden. Die empfangene Signalamplitude als Funktion der Zeit stellt die Echofunktion dar. Jeder Wert dieser Echofunktion entspricht der Amplitude eines in einem bestimmten Abstand von der Antenne reflektierten Echos.

Beim FMCW-Verfahren wird eine kontinuierliche Mikrowelle gesendet, die periodisch linear frequenzmoduliert ist, beispielsweise nach einer Sägezahnfunktion. Die Frequenz des empfangenen Echosignals weist daher gegenüber der Augenblicksfrequenz, die das Sendesignal zum Zeitpunkt des Empfangs hat, eine Frequenzdifferenz auf, die von der Laufzeit des Echosignals abhängt. Die Frequenzdifferenz zwischen Sendesignal und Empfangssignal, die durch Mischung beider Signale und Auswertung des Fourierspektrums des Mischsignals gewonnen werden kann, entspricht somit dem Abstand der reflektierenden Fläche von der Antenne. Ferner entsprechen die Amplituden der Spektrallinien des durch Fouriertransformation gewonnenen Frequenzspektrums den Echoamplituden. Dieses Fourierspektrum stellt daher in diesem Fall die Echofunktion dar.

Mit Mikrowellen arbeitende Füllstandsmeßgeräte werden in sehr vielen Industriezweigen, z.B. in der Chemie oder in der Lebensmittelindustrie, eingesetzt. Typischerweise ist der Füllstand in einem Behälter zu messen. Diese Behälter weisen üblicherweise eine Öffnung auf, an der ein Stutzen oder ein Flansch zur Befestigung von Meßgeräten vorgesehen ist.

Stabförmige Antennen, häufig auch als Stabantenne oder dielektrischer Stielstrahler bezeichnet, werden immer dann bevorzugt eingesetzt, wenn die Behälteröffnung einen geringen Durchmesser aufweist. Stabantennen weisen einen im Vergleich zu Hornstrahlern geringen Außendurchmesser auf.

In der DE-A 44 05 855 ist ein mit Mikrowellen arbeitendes, auf einem Behälter zu befestigendes Füllstandsmeßgerät beschrieben, mit einem Gehäuse und mit einer stabförmigen in dem Gehäuse befestigten Antenne, die in den Behälter weist und die aus einem Dielektrikum besteht.

In der DE-A 44 43 055 ist ein mit Mikrowellen arbeitendes Füllstandsmeßgerät beschrieben, bei dem auf einer stabförmigen Antenne aus einem Dielektrikum voneinander beabstandet metallische Elemente angeordnet sind. Diese sind miteinander elektrisch leitend verbunden. Diese metallischen Elemente dienen zum einen dazu, die Mikrowellen zu bündeln, und zum anderen dazu, eine statische Aufladung der dielektrischen Stabantenne zu verhindern.

Ein Nachteil der vorgenannten mit Mikrowellen arbeitenden Füllstandsmeßgeräte besteht darin, daß eine Stabantenne Mikrowellenstrahlung sowohl im wesentlichen vorwärts, als Hauptkeule in den Behälterinnenraum sendet als auch aufgrund deren Richtcharakteristik senkrecht zur Antennenachse in Form von Nebenkeulen abstrahlt. Typischerweise liegt die Amplitude einer ersten Nebenkeule nur 20 dB bis 25 db unterhalb der Amplitude der Hauptkeule. Die in der DE -A 44 43 055 beschriebene Bündelung mittels metallischer Elemente führt hier zwar zu einer Verbesserung, ist jedoch nicht geeignet, eine radiale Abstrahlung zu unterbinden.

Der radial gesendete Anteil der Mikrowellenstrahlung wird zumindest teilweise an dem Rand der Öffnung des Behälters und an der Meßgerätbefestigung reflektiert und stellt dadurch eine Störstrahlung dar, die die Messung erheblich beeinträchtigen kann. Diese Störstrahlung tritt bereits dann auf, wenn die Höhe der Meßgerätbefestigung sehr gering ist, z.B. nur einige Zentimeter beträgt. Der Anteil der Störstrahlung hängt von der Einbauweise des Meßgeräts ab und ist z.B. bei auf rohrförmigen Stutzen befestigten Meßgeräten besonders groß.

Diese Störstrahlung entsteht z.B., indem ein Anteil der gesendeten Mikrowellenenergie direkt an dem Stutzen reflektiert und anschließend von der Antenne empfangen wird, ohne in den Behälter zu gelangen oder indem in dem Stutzen Mehrfachreflexionen auftreten. Diese Reflexionen oder Mehrfachreflexionen führen zu einer künstlichen Verlängerung von kurzen zu sendenden Mikrowellenimpulsen. Eine Füllstandsmessung nach dem Pulsradar-Verfahren ist jedoch nur dann durchführbar, wenn die Laufzeit des Meßsignal größer ist als die Dauer des Sendepulses und die Zeit, in der die letztgenannten Störsignale abgeklungen sind. Für das FMCW-Verfahren gilt analog, daß die Frequenzverschiebung des Meßsignals größer sein muß als die Frequenzverschiebung der Störsignale.

Je geringer der Abstand zwischen Meßgerätbefestigung, z.B. Stutzen, und Antenne ist, umso größer sind die Auswirkungen, für die Ausbreitung der Mikrowellen im Nahfeld der Antenne.

Neben der zur Füllstandsmessung genutzten MikrowellenStrahlung, die von der Antenne direkt zum Füllgut gesendet und dort direkt zur Antenne reflektiert wird, gelangt auch Störstrahlung, die den Umweg über mindestenst eine Reflexion an der Meßgerätbefestigung zurückgelegt hat, zur Antenne. Dies führt zu einer fehlerhaften Bestimmung der Laufzeit und damit zu fehlerhaften Meßergebnissen.

Ein weiterer Nachteil der vorgenannten Füllstandsmeßgeräte besteht darin, daß z.B. Kondensat oder Feuchtigkeit dazu führen können, daß sich eine direkte elektrische Verbindung zwischen der Antenne und der Behälterbefestigung ausbildet. Ein solcher Kurzschluß bewirkt genau wie das Kurzschließen einer Koaxialleitung eine Reflexion der gesamten Mikrowellen-Energie zum Sender und verhindert das Senden von Mikrowellen.

Auch wenn es nicht zu einem solchen Kurzschluß kommt, wirken sich Kondensat und/oder Feuchtigkeit sehr nachteilig aus, da sie einen direkten Einfluß auf die Ausbreitung und das Reflexionsverhalten von Mikrowellen haben. So kann z.B. Störstrahlung, die direkt nach dem Einbau des Geräts nur in geringem Maß auftrat, durch Kondensat und/oder Feuchtigkeit so stark zunehmen, daß eine Füllstandsmessung nicht mehr möglich ist. Dies ist besonders nachteilig, da der Gerätebetreiber davon ausgeht, über ein zuverlässig funktionierendes Meßgerät zu verfügen.

Es ist daher eine Aufgabe der Erfindung, ein mit Mikrowellen arbeitendes Füllstandsmeßgerät anzugeben, bei dem die Antenne im Bereich der Meßgerätbefestigung keine Mikrowellen sendet und bei dem sie keine im Bereich der Meßgerätbefestigung reflektierten Mikrowellen empfängt.

Weiterhin ist es eine Aufgabe der Erfindung, ein Meßgerät anzugeben, bei dem die Sendeleistung durch Kondensat oder Feuchtigkeit unbeeinträchtigt ist.

Die Erfindung besteht in einem mit Mikrowellen arbeitenden, auf einem Behälter zu befestigenden, Füllstandsmeßgerät mit den Merkmalen des Anspruchs 1.

Gemäß einer Weiterbildung der ersten Lösungsvariante sind Mikrowellen über eine Koaxialleitung einem in das Gehäuse eingeführten Erregerelement zugeführt.

Gemäß einer Ausgestaltung der Erfindung einer der Lösungsvarianten weist die Antenne einen von der metallischen Hülse umschlossenen Vollzylinder und einen daran angeformten, in den Behälter-Innenraum gerichteten Sendestab auf.

Gemäß einer weiteren Ausgestaltung einer der Lösungsvarianten ist die Hülse ein Rohr, dessen in den Behälter-Innenraum gerichtetes Ende abgeschrägt ist.

Gemäß einer weiteren Ausgestaltung der Erfindung ist die Hülse von einer Schutzhülse, insb. aus Polytetrafuorethylen (PTFE), umgeben.

Gemäß einer weiteren Ausgestaltung der ersten Lösungsvariante ist der Gehäuseabschnitt, in dem die Antenne befestigt ist, ein einseitig kurzgeschlossener Rundhohlleiter und die Hülse ist eine Verlängerung des kurzgeschlossenen Rundhohlleiters und liegt auf dem gleichen elektrischen Potential wie der Abschnitt des Gehäuses, in dem die Antenne befestigt ist.

Gemäß einer weiteren Ausgestaltung der ersten Lösungsvariante ist der Innendurchmesser der Hülse größer als der Innendurchmesser des Abschnitts des Gehäuses, in dem die Antenne befestigt ist.

Gemäß einer weiteren Ausgestaltung der Erfindung ist an die Schutzhülse in einem an das Gehäuse angrenzenden Bereich ein Flansch, insb. aus Polytetrafluorethylen (PTFE), angeformt.

Gemäß einer weiteren Ausgestaltung der ersten Lösungsvariante ist der Sendestab mit dem Vollzylinder über ein Gewinde verschraubt, der Vollzylinder mit dem in dem Gehäuse befestigten Abschnitt der Antenne über ein Gewinde verschraubt und die Antenne in das Gehäuse eingesteckt oder eingeschraubt.

Gemäß einer Weiterbildung der zweiten Lösungsvariante sind Mikrowellen über eine durch die Hülse hindurchgeführte Koaxialleitung einem in einem antennen-zugewandten Abschnitt der Hülse angeordneten Erregerelement, insb. einem auf einem Grundkörper angeordneten Sendedraht, zugeführt.

Weiterhin besteht die Erfindung in einem Verfahren zur Herstellung eines Füllstandsmeßgeräts, bei dem ein in der Hülse anzuordnender Abschnitt der Antenne in abgekühltem Zustand in die Hülse eingeführt wird, und in einem Verfahren zur Herstellung eines Füllstandsmeßgeräts, bei dem die Schutzhülse in erwärmtem Zustand über die Hülse geschoben wird.

Ein Vorteil der Erfindung besteht darin, daß durch die Hülse aus dem Bereich der Meßgerätbefestigung auf die Antenne auftreffende Mikrowellenstrahlung vollständig ausgeblendet ist. Die zu sendende Mikrowellenstrahlung wird im Inneren der Hülse in den Behälter geleitet. Im Bereich der Meßgerätbefestigung wird somit keine Mikrowellenstrahlung gesendet und auch keine Empfangen.

Ein Vorteil der Erfindung besteht darin, daß die Sendeleistung des Füllstandsmeßgeräts durch Feuchtigkeit oder Kondensat nicht beeinflußt ist. Eine elektrisch leitende Verbindung zwischen der Hülse und der Meßgerätbefestigung hat keine Auswirkungen.

Bei einem Füllstandsmeßgerät gemäß der ersten Lösungsvariante übernimmt die Hülse die Funktion eines Außenleiters und schirmt den Inneraum ab. Die metallische Hülse wirkt für Mikrowellen wie ein Spiegel. Typischerweise sind Behälter geerdet. Sowohl Hülse als auch die Meßgerätbefestigung liegen vorzugsweise an einem Erdpotential.

Das Vorgesagte gilt für ein Füllstandsmeßgerät gemäß der zweiten Lösungsvariante ebenfalls. Hier jedoch nur für einen Abschnitt der Hülse, der sich auf der behälterzugewandten Seite des Erregerelements befindet. In einem auf der behälter-abgewandten Seite des Erregerelements angeordneten Abschnitt der Hülse erfolgt die elektrische Abschirmung durch die darin verlaufende Koaxialleitung, die durch die Hülse mechanisch geschützt ist.

Die Erfindung und weitere Vorteile werden nun anhand der Figuren der Zeichnung, in denen zwei Ausführungsbeispiele eines mit Mikrowellen arbeitenden Füllstandsmeßgeräts gemäß der ersten Lösungsvariante und ein Ausführungsbeispiel eines mit Mikrowellen arbeitenden Füllstandsmeßgeräts gemäß der zweiten Lösungsvariante dargestellt sind, näher erläutert; gleiche Teile sind in den Figuren mit gleichen Bezugszeichen versehen.
- Fig. 1: zeigt einen Längsschnitt durch ein mit Mikrowellen arbeitendes Füllstandsmeßgerät gemäß der ersten Lösungsvariante;
- Fig. 2: zeigt einen Längsschnitt durch ein mit Mikrowellen arbeitendes Füllstandsmeßgerät, gemäß der ersten Lösungsvariante bei dem die Hülse ein einseitig endseitig abgeschrägtes Rohr ist; und
- Fig. 3: zeigt einen Längsschnitt durch ein mit Mikrowellen arbeitendes Füllstandsmeßgerät gemäß der zweiten Lösungsvariante.

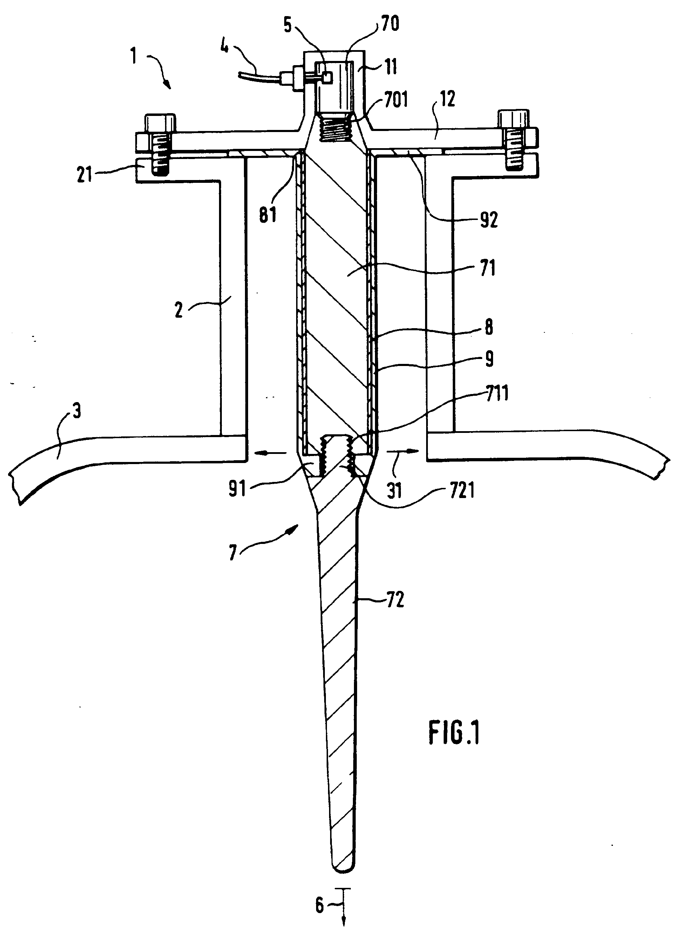

In Fig. 1 ist ein mit Mikrowellen arbeitendes Füllstandsmeßgerät 1 gemäß der ersten Lösungsvariante schematisch dargestellt. Als Meßgerätbefestigung dient ein Stutzen 2, auf dem das Füllstandsmeßgerät 1 befestigt ist. Der Stutzen 2 ist rohrförmig und auf einer kreisförmigen Öffnung 31 eines Behälters 3 montiert, z.B. angeschweißt. In dem Behälter 3 befindet sich ein Medium.

Das Füllstandmeßgerät 1 dient dazu, die Füllhöhe dieses Mediums in dem Behälter zu bestimmen. Es weist ein Gehäuse 11 auf, das die Form eines Topfes bzw. eines einseitig endseitig abgeschlossenen Rohres besitzt. An dieses Gehäuse 11 ist unter Freilassung der Topf- bzw. Rohröffnung ein Flansch 12 angeformt. Der Stutzen 2 weist auf dessen behälter-abgewandten Seite einen entsprechenden Gegenflansch 21 auf. Flansch 12 und Gegenflansch 21 sind mittels Schrauben derart miteinander verbunden, daß die Topf- bzw. Rohröffnung der Öffnung 31 des Behälters 3 zugewandt ist und die Symmetrieachsen von Gehäuse 11 und Stutzen 2 identisch sind.

Die Mikrowellen werden von einem nicht dargestellten Mikrowellen-Generator erzeugt und über eine Koaxialleitung 4 einem seitlich in das Gehäuse 11 eingeführten Erregerelement 5 zugeführt.

Der Mikrowellen-Generator ist beispielsweise ein Pulsradar-Gerät, ein FMCW-Gerät oder ein kontinuierlich schwingender Mikrowellen-Oszillator.

Das Gehäuse 11 besteht aus einem elektrisch leitenden Material, z.B. Aluminium, Edelstahl oder mit einem leitfähigen Material beschichteter Kunststoff, und weist einen kreisförmigen Querschnitt auf. Es ist somit seiner Geometrie nach ein kurzgeschlossener Rundhohlleiter, in dem sich der zu sendende Mikrowellen-Mode ausbildet. Die Abstrahlrichtung der Mikrowellen ist durch einen Pfeil 6 angedeutet.

In dem Gehäuse 11 ist eine stabförmige Antenne 7 aus einem Dielektrikum befestigt. Die Antenne 7 füllt den Innenraum des Gehäuses 11 bis auf eine zur Aufnahme des Erregerelements 5 vorgesehenen Ausnehmung vollständig aus und erstreckt sich durch die die Öffnung 31 hindurch in den Behälter 3.

Die Antenne ist stabförmig und weist drei Abschnitte auf, einen ersten in dem Gehäuse 11 befestigten Abschnitt 70, einen daran angrenzenden Vollzylinder 71 und einen daran endseitig auf dessen behälter-zugewandter Seite angeformten, in den Behälter-Innenraum gerichteten Sendestab 72. Alle drei Abschnitte bestehen aus einem Dielektrikum, vorzugsweise aus Polytetrafluorethylen (PTFE) oder aus Polyphenylensulfid (PPS). Beides sind Werkstoffe, die leicht zu bearbeiten sind und eine hohe chemische Beständigkeit aufweisen.

An dem Abschnitt 70 ist endseitig ein Außengewinde 701 vorgesehen, auf das der eine entsprechende Öffnung mit einem Innengewinde aufweisende Vollzylinder 71 aufgeschraubt ist. Der Vollzylinder 71 weist an dessen an den Sendestab 72 angrenzendem Ende eine Öffnung mit einem Innengewinde 711 auf. In dieses Innengewinde 711 ist ein entsprechend geformter Fortsatz 721 des Sendestab 72 eingeschraubt. Selbstverständlich sind andere Arten der Verbindung der Antennenabschnitte als die gewählte sowie auch die Verwendung einer einteiligen Antenne möglich.

Der Abschnitt 70 kann in dem Gehäuse 11 ebenfalls durch ein Gewinde befestigt werde. In dem Ausführungsbeispiel ist jedoch eine andere Befestigung gewählt, die in einem nachfolgenden Absatz erläutert ist.

Der Abschnitt des Gehäuses 11, in dem die Antenne 7 befestigt ist, und die Antenne 7 können auch andere Querschnittsgeometrien aufweisen, die mit dem zu sendenden Mode und der oder den Sendefrequenzen vereinbar sind. Die Geometrie eines kurzgeschlossenen Rundhohlleiters und eines entsprechenden kreisförmigen Antennenquerschnitts sind insofern vorteilhaft, als bei einer solchen Geometrie Moden ausbreitungsfähig sind, die eine Abstrahlcharakteristik mit einer ausgeprägten Vorwärtskeule ergeben.

Ein in dem Stutzen 2 befindlicher Abschnitt der Antenne 7 ist von einer metallischen Hülse 8 umschlossen. Die Hülse 8 besteht z.B. aus Edelstahl und liegt direkt an der Antenne 7 an. In dem Ausführungsbeispiel von Fig. 1 ist die Hülse 8 genau wie die Antenne rohrförmig und umschließt den Vollzylinder 71 eng. Das enge Anliegen der Hülse 8 an der Antenne ist erforderlich, damit für Mikrowellen nur eine einzige Grenzfläche, an der ein Impedanzsprung erfolgt, nämlich die zwischen Hülse 8 und Antenne 7, vorliegt. Weitere Grenzflächen, z.B. bedingt durch eingeschlossene Luftblasen, verschlechtern die Qualität der Hülse 8 als Verlängerung des Hohlleiters.

Dieses enge Anliegen der Hülse 8 wird erzielt, indem der in der Hülse 8 anzuordnende Abschnitt der Antennte 7, hier der Vollzylinder 71 vor dem Einbringen in die Hülse 8 abgekühlt wird. Der durch Abkühlung geschrumpfte Vollzylinder 71 wird in die Hülse 8 eingeführt und dehnt sich bei der nachfolgenden Erwärmung wieder aus. Da Polytetrafuorethylen (PTFE) ein in begrenztem Maße fließfähiger Werkstoff ist, paßt sich der Vollzylinder 71 an die Innengeometrie der Hülse 8 an. Polyphenylensulfid (PPS) ist ein Werkstoff, der einen thermischen Ausdehnungskoeffizient aufweist, der dem von Stahl sehr ähnlich ist. Bauteile aus Polyphenylensulfid (PPS) können mit geringen Fertigungstoleranzen hergestellt werden und verhalten sich über die Temperatur im wesentlichen genauso wie die metallische Hülse 8.

Die Länge des Vollzylinders 71 und der Hülse 8 in axialer Richtung ist vorzugsweise gleich der Höhe des Stutzens 2. Durch die Wirkung der Hülse 8 als Spiegel für Mikrowellen wird somit die gesamte Mikrowellenstrahlung, die im Bereich des Stutzens auf die Antenne 7 auftreffen würde, ausgeblendet. Störsignale aus diesem Bereich werden somit nicht empfangen.

Die Hülse 8 liegt auf dem gleichen elektrischen Potential, wie der Abschnitt des Gehäuses 11, in dem die Antenne 7 befestigt ist. In dem Ausführungsbeispiel gemäß der Figur 1 erfolgt dies, indem die Hülse 8 mit einer ringscheibenförmigen Stirnfläche 81 direkt an dem Gehäuse 11 anliegt. Die Hülse 8 ist somit eine Verlängerung des durch das Gehäuse 11 gebildeten, kurzgeschlossenen Rundhohlleiters.

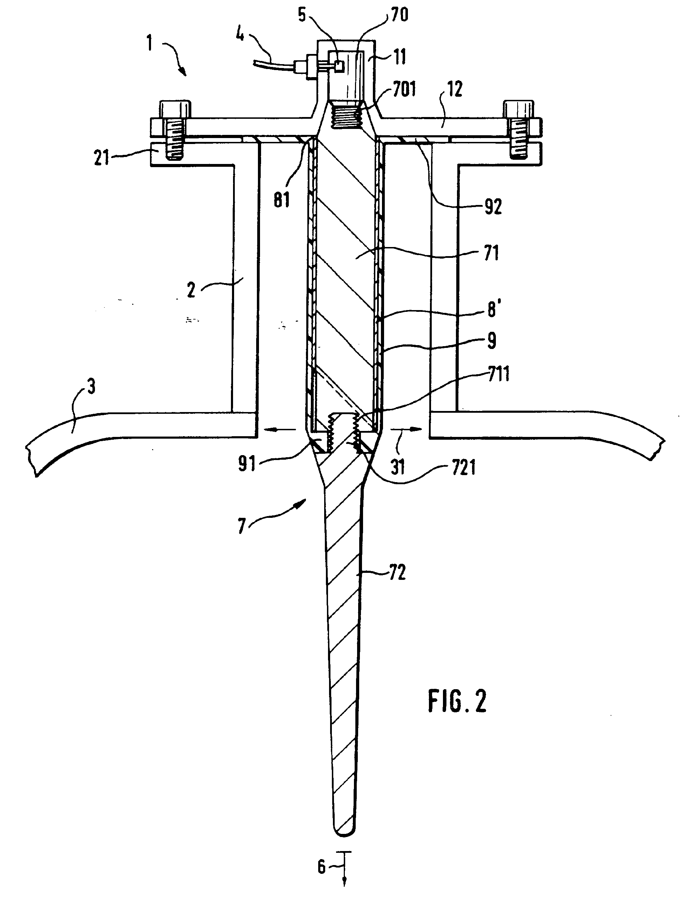

An dem sendestab-zugewandten Ende der Hülse 8 tritt ein Impedanzsprung auf. Zur Erzielung eines kontinuierlichen Übergangs der Impedanz anstelle des bei einem gerade abgeschnittenen Rohres auftretenden Impedanzsprungs ist bei dem in Fig. 2 dargestellten Füllstandsmeßgerät gemäß der ersten Lösungsvariante eine Hülse 8' verwendet, die die Form eines an dessen sendestab-zugewandten Ende abgeschrägten, d.h. schräg zur Senkrechten auf die Rohrlängsachse abgeschnittenen, Rohres aufweist. Der Verlauf des Schnitts ist in Fig. 2 durch eine gestrichelte Linie dargestellt.

Ein durch z.B. Feuchtigkeit oder Ansatz bedingter Kurzschluß bleibt ohne Wirkung auf die Sendeeigenschaften des Füllstandsmeßgeräts. Geht man davon aus, daß der Behälter 3 und das Gehäuse 11 geerdet sind, so würde eine elektrisch leitende Verbindung zwischen dem Stutzen 2 und der Antenne 7 bei Abwesenheit der Hülse 8 einem Kurzschluß zwischen dem Innenleiter der Koaxialleitung 4 und dem Außenleiter der Koaxialleitung 4 entsprechen, denn der Innenleiter ist über das Erregerelement 5 mit der Antenne 7 verbunden und der Außenleiter der Koaxialleitung 4 ist über das Erregerelement 5 und das Gehäuse 11 mit dem Stutzen 2 verbunden.

Experimente haben gezeigt, daß es vorteilhaft ist, eine Hülse 8 mit einem Innendurchmesser zu verwenden, der größer als der Innendurchmesser des Abschnitts des Gehäuses 11 ist, in dem die Antenne 7 befestigt ist. Verlustleistung und Dispersion können hierdurch deutlich verringert werden. Besonders ausgeprägt sind diese Vorteile in Verbindung mit dem Pulsradarverfahren. Kurze Pulse weisen Frequenzspektren mit einer großen Bandbreite auf.

In den Ausführungsbeispielen ist die Hülse 8 von einer Schutzhülse 9 umgeben, die eng an einer zylindrischen äußeren Mantelfläche der Hülse 8 anliegt. Hierzu ist sie in den in den Figuren dargestellten Ausführungsbeispielen rohrförmig und weist an deren sendestab-zugewandten Ende eine sich radial in das Rohrinnere erstreckende Schulter 91 auf. Die Schulter 91 hat eine zentrale durchgehende Bohrung mit einem Innengewinde. Der Fortsatz 721 des Sendestabs 72 wird bei dessen Befestigung an dem Vollzylinder 71 durch diese Bohrung hindurch geschraubt.

Die Schutzhülse 9 besteht vorzugsweise ebenfalls aus einem chemisch hochbeständigen Werkstoff, insb. aus Polytetrafluorethylen (PTFE). Die Verwendung des gleichen Werkstoffs für alle Elemente gewährleistet, daß alle Elemente den gleichen widrigen Bedingungen standhalten. Die Schutzhülse 9 hat keinerlei Auswirkungen auf das Sende- und Empfangsverhalten der Antenne 7. Sie bietet den Vorteil, daß für die Hülse 8 einfache kostengünstige Materialien einsetzbar sind, da sie die Hülse 8 sowohl vor Feuchtigkeit schützt, als auch verhindert, daß diese mit dem möglicherweise chemisch aggressiven oder abrasiven Medium in Berührung gelangt.

Bei der Herstellung eines erfindungsgemäßen Füllstandsmeßgeräts wird die Schutzhülse 9 erwärmt. Dadurch dehnt sie sich aus und wird geringfügig verformbar. In diesem erwärmten Zustand wird die Schutzhülse 9 über die Hülse 8 geschoben. Beim nachfolgenden Abkühlen schrumpft die Schutzhülse 9 auf die Hülse 8 auf.

An die Schutzhülse 9 ist an deren gehäuse-zugewandten Ende ein ringscheibenförmiger Flansch 92 angeformt, der parallel zu dem Flansch 12 des Gehäuses 11 verläuft und zwischen dem Flansch 12 und dem Gegenflansch 21 eingespannt ist. Da die Schutzhülse 9 fest mit der Antenne 7 verbunden ist, wird durch die Einspannung des Flanschs 92 die Antenne 7 in dem Gehäuse 11 fixiert.

Vorzugsweise besteht der Flansch 92 aus einem zum Dichten geeigneten Material, insb. aus Polytetrafluorethylen (PTFE), so daß der Flansch 92 eine Abdichtung der Behälteröffnung bildet.

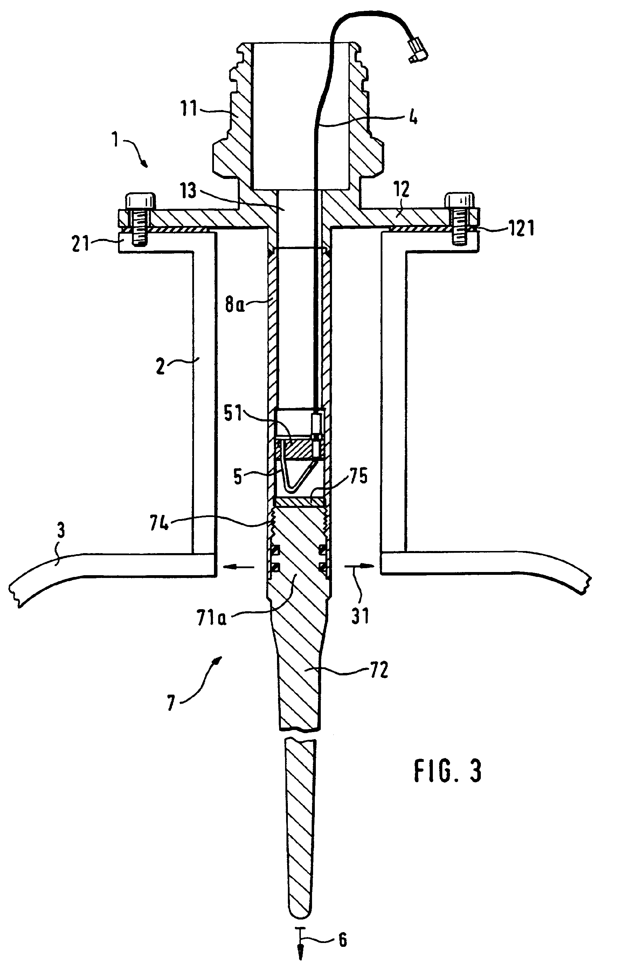

Fig. 3 zeigt ein Mikrowellen arbeitendes Füllstandsmeßgerät gemäß der zweiten Lösungsvariante. Es ist ebenfalls auf einem Stutzen 2 auf einem Behälter 3 befestigt. Genau wie die vorbeschriebenen Füllstandsmeßgeräte weist es ein Gehäuse 11 auf, an dem ein Flansch 12 angeformt ist, der auf einem an dem Stutzen 2 angeordneten Gegenflansch 21 befestigt ist. Zwischen Flansch 12 und Gegenflansch 21 ist eine ringscheibenförmige Dichtung 121, z.B. aus Polytetrafluorethylen (PTFE), angeordnet.

An das Gehäuse 11 ist eine in Richtung des Behälters 3 weisende Hülse 8a angeformt. In dem in Fig. 3 dargestellten Ausführungsbeispiel ist die Hülse 8a ein Rohr aus einem Metall, z.B. aus einem Stahl oder einem Edelstahl, die an das Gehäuse 11 angeschweißt ist. Das Gehäuse 11 weist eine durchgehende in Richtung des Behälters 3 orientierte Öffnung 13 auf, deren Innendurchmesser in dem Ausführungsbeispiel gleich dem Innendurchmesser der Hülse 8a ist. Die innendruchmesser können auch verschieden sein.

In der Hülse 8a ist eine stabförmige Antenne 7 befestigt. Genau wie in den vorbeschriebenen Ausführungsbeispielen weist die Antenne 7 einen Vollzylinder 71a und einen daran angeformten in den Behälter-Innenraum gerichteten Sendestab 72 auf und besteht aus einem Dielektrikum, insb. aus Polytetrafluorethylen (PTFE) oder aus Polyphenylensulfid (PPS). Der Vollzylinder 71a ist von einem behälterzugewandten Abschnitt der Hülse 8a umschlossen und in diesen mittels eines an dem Vollzylinder 71a angeformten Außengewindes 74 eingeschraubt.

In einem antennen-zugewandten Abschnitt der Hülse 8a ist ein Erregerelement 5 angeordnet. Diesem werden Mikrowellen über eine durch die Öffnung 13 des Gehäuses 11 und die Hülse 8a hindurchgeführte Koaxialleitung 4 zugeführt.

Das Erregerelement 5 ist ein auf einem Grundkörper 51 angeordneter Sendedraht, der mit einem Innenleiter der Koaxialleitung 4 verbunden ist. Hierzu ist eine Durchführung durch den Grundkörper 51 vorgesehen. Der Grundkörper 51 ist scheibenförmig und besteht aus einem Metall. Ein in antennen-zugewandter Richtung vor dem Grundkörper 51 angeordneter Abschnitt der Hülse 8a bildet zusammen mit dem Grundkörper 51 einen kurzgeschlossenen Rundhohlleiter, in den die Mikrowellen durch den Sendedraht 5 eingekoppelt werden. Vor dem Grundkörper 51 ist ein Zylinder 75 aus einem Dielektrikum, insb. aus Polytetraflourethylen (PTFE) oder aus Polyphenylensulfid (PPS) angeordnet, der eine spaltförmige Ausnehmung zur Aufnahme des Sendedrahts aufweist.

Die Länge der Hülse 8a in axialer Richtung ist vorzugsweise gleich der Höhe der Meßgerätbefestigung, also hier gleich der Höhe des Stutzens 2, oder länger. Die Antenne 7 kann dann im Bereich einer Meßgerätbefestigung keine Mikrowellen senden und auch keine Mikrowellen empfangen. Auch wird die Sendeleistung durch z.B. zwischen Stutzen 2 und Hülse 8a befindliches Kondensat oder Feuchtigkeit nicht beeinträchtigt.

Derjenige Abschnitt der Hülse 8a der sich auf der behälterzugewandten Seite des Erregerelements 5 befindet hat die Funktion eines Außenleiters und schirmt den Inneraum ab. Die metallische Hülse 8a wirkt für Mikrowellen wie ein Spiegel. Typischerweise sind Behälter geerdet. Sowohl Hülse 8a als auch die Meßgerätbefestigung, hier der Stutzen 2, liegen vorzugsweise an einem Erdpotential.

In dem auf der behälter-abgewandten Seite des Erregerelements 5 angeordneten Abschnitt der Hülse 8a erfolgt die elektrische Abschirmung durch die darin verlaufende Koaxialleitung 4. Diese ist durch die Hülse 8a mechanisch geschützt.

Bei mit Mikrowellen arbeitenden Füllstandsmeßgeräten gemäß der zweiten Lösungsvariante besteht wie bei denjenigen gemäß der ersten Lösungsvariante die Möglichkeit, ein in den Behälter-Innenraum gerichtetes Ende der Hülse 8a abgeschrägt auszubilden. Genauso kann die Hülse 8a von einer Schutzhülse, insb. aus Polytetrafluorethylen (PTFE), umgeben werden. Hierzu wäre z.B. die Geometrie des behälter-zugewandten Endes des Vollzylinders 71a und des vollzylinder-zugewandten Endes des Sendestabs 72 analog zu der des Vollzylinders 71 und des Sendestabs 72 von Fig. L auszubilden. Die in Fig. 1 dargestellte Schutzhülse 9 wäre auch hier in erwärmtem Zustand über die Hülse 8a zu schieben. Alternativ kann eine Schutzhülse auf die Hülse 8a aufgeschoben und endseitig, z.B. mit dem Sendestab 72 der Antenne 7, verschweißt sein. Weiterhin kann an die Schutzhülse in einem an das Gehäuse 11 angrenzenden Bereich ein Flansch, insb. aus Polytetrafluorethylen (PTFE), angeformt sein. Sofern ein solcher Flansch eine äußere zwischen dem Flansch 12 und dem Gegenflansch 21 eingespannte äußere Ringfläche aufweist, kann die Dichtung 121 entfallen.

## Patentansprüche

1. Mit Mikrowellen arbeitendes, über einen Stutzen (2) auf einem Behälter (3) zu befestigendes, Füllstandsmeßgerät mit
- einem Gehäuse (11) und
- einer stabförmigen in dem Gehäuse (11) befestigten Antenne (7),
-- die in den Behälter (3) weist und
-- die aus einem Dielektrikum, insb. aus Polytetrafluorethylen (PTFE) oder aus Polyphenylensulfid (PPS), besteht,
**dadurch gekennzeichent,**
**dass** ein an das Gehäuse (11) angrenzender und in dem Stutzen (2) befindlicher Abschnitt der Antenne (7) von einer metallischen Hülse (8, 8'), die als Spiegel für Mikrowellen wirkt, eng umschlossen ist.

2. Füllstandsmeßgerät nach Anspruch 1,
**dadurch gekennzeichnet,**
**dass** die Antenne (7) einen von der Hülse (8, 8', 8a) umschlossenen Vollzylinder (71, 71a) und einen daran angeformten in den Behälter-Innenraum gerichteten Sendestab (72) aufweist.

3. Füllstandsmeßgerät nach Anspruch 2,
**dadurch gekennzeichnet,**
**dass** die Hülse (8') ein Rohr ist, dessen in den Behälter-Innenraum gerichtetes Ende abgeschrägt ist.

4. Füllstandsmeßgerät nach Anspruch 1,
**dadurch gekennzeichnet,**
**dass** die Hülse (8, 8') von einer Schutzhülse (9), insb. aus Polytetrafluorethylen (PTFE), umgeben ist.

5. Füllstandsmeßgerät nach Anspruch 1,
**dadurch gekennzeichnet, dass**
- ein Abschnitt des Gehäuses (11), in dem die Antenne (7) befestigt ist, ein einseitig kurzgeschlossener Rundhohlleiter ist,
- die Hülse (8,8') eine Verlängerung dieses Rundhohlleiters ist und
- die Hülse (8, 8') und der Abschnitt des Gehäuses (11) in dem die Antenne (7) befestigt ist, auf dem gleichen elektrischen Potential liegen.

6. Füllstandsmeßgerät nach Anspruch 5,
**dadurch gekennzeichnet,**
**dass** der Innendurchmesser der Hülse (8, 8') größer ist als der Innendurchmesser des Abschnitts des Gehäuses (11), in dem die Antenne (7) befestigt ist.

7. Füllstandsmeßgerät nach Anspruch 4,
**dadurch gekennzeichnet,**
**dass** an die Schutzhülse (9) in einem an das Gehäuse (11) angrenzenden Bereich ein Flansch (72), insb. aus Polytetrafluorethylen (PTFE), angeformt ist.

8. Füllstandsmeßgerät nach Anspruch 2,
**dadurch gekennzeichnet, dass**
- der Sendestab (72) mit dem Vollzylinder (71) über ein Gewinde verschraubt ist,
- der Vollzylinder (71) mit dem in dem Gehäuse (11) befestigten Abschnitt der Antenne (7) über ein Gewinde verschraubt ist und
- die Antenne (7) in das Gehäuse (11) eingesteckt oder eingeschraubt ist.

9. Füllstandsmeßgerät nach Anspruch 1,
**dadurch gekennzeichnet,**
**dass** ein in der Hülse (8, 8') anzuordnender Abschnitt der Antenne (7) in abgekühltem Zustand in die Hülse (8, 8') eingeführt wird.

10. Füllstandsmeßgerätnach Anspruch 4,
**dadurch gekennzeichnet,**
**dass** die Schutzhülse (9) in erwärmtem Zustand über die Hülse (8, 8') geschoben wird.

## Claims

1. Level measuring device, which works with microwaves and is to be secured on a tank (3) via a nozzle (2) with
- a housing (11) and
- a rod-like antenna (7) secured in the housing (11)
-- where said antenna points into the tank (3) and
-- where said antenna comprises a dielectric, particularly polytetrafluoroethylene (PTFE) or polyphenylene sulfide (PPS)
**characterized in that**
a section of the antenna (7), which is adjacent to the housing (11) and located in the nozzle (2), is enclosed by a metal sleeve (8, 8') which acts as a mirror for microwaves.

2. Level measuring device as per Claim 1,
**characterized in that**
the antenna (7) has a full cylinder (71, 71 a), enclosed by the sleeve (8, 8', 8a) and an integrally molded transmitter rod (72) that points into the inside of the tank.

3. Level measuring device as per Claim 2
**characterized in that**
the sleeve (8') is a pipe whose end that points into the inside of the tank is beveled.

4. Level measuring device as per Claim 1,
**characterized in that**
the sleeve (8, 8') is surrounded by a protective sleeve (9), particularly polytetrafluoroethylene (PTFE).

5. Level measuring device as per Claim 1;
**characterized in that**
- a section of the housing (11) in which the antenna (7) is secured is a circular waveguide which is short-circuited at one end
- the sleeve (8, 8') is an extension of this circular waveguide
- the sleeve (8, 8') and the section of the housing (11) in which the antenna (7) is secured are on the same electrical potential.

6. Level measuring device as per Claim 5,
**characterized in that**
the internal diameter of the sleeve (8, 8') is bigger than the internal diameter of the section of the housing (11) in which the antenna (7) is secured.

7. Level measuring device as per Claim 4,
**characterized in that**
a flange (72), particularly a flange made of polytetrafluoroethylene (PTFE), is integrally molded onto the protective sleeve (9) in an area adjacent to the housing (11).

8. Level measuring device as per Claim 2,
**characterized in that**
- the transmitter rod (72) is screw-connected to the full cylinder (71) via a thread
- the full cylinder (71) is screw-connected to the section of the antenna (7) secured in the housing (11) via a thread
- the antenna (7) is inserted or screwed into the housing (11).

9. Level measuring device as per Claim 1,
**characterized in that**
a section of the antenna (7) to be arranged in the sleeve (8, 8') is inserted into the sleeve (8, 8') in a cool state.

10. Level measuring device as per Claim 4,
**characterized in that**
the protective sleeve (9) is fitted over the sleeve (8, 8') in a warm state.

## Revendications

1. Transmetteur de niveau fonctionnant avec des micro-ondes, fixé sur un réservoir (3) par le biais d'une tubulure (2), avec
- un boîtier (11) et
- une antenne (7) en forme de tige, fixée dans le boîtier (11),
-- qui s'étend dans le réservoir (3) et
-- qui est constituée d'un diélectrique, notamment en polytétrafluoroéthylène (PTFE) ou en polyphénylène sulfide (PPS,
**caractérisé en ce qu'**une section de l'antenne (7) adjacente au boîtier (11) et se trouvant dans la tubulure (2) est entourée étroitement d'une douille métallique (8, 8'), qui agit de miroir pour les micro-ondes.

2. Transmetteur selon la revendication 1,
**caractérisé en ce**
**que** l'antenne (7) présente un cylindre plein (71, 71a) entouré par la douille (8, 8', 8a) et une tige émettrice (72) formée contre le cylindre et dirigée à l'intérieur du réservoir.

3. Transmetteur selon la revendication 2,
**caractérisé en ce**
**que** la douille (8') est un tube, dont l'extrémité orientée vers l'intérieur du réservoir est biseautée.

4. Transmetteur selon la revendication 1,
**caractérisé en ce**
**que** la douille (8, 8') est entourée d'une douille de protection (9), notamment en polytétrafluoroéthylène (PTFE).

5. Transmetteur selon la revendication 1,
**caractérisé en ce que**
- une partie du boîtier (11), dans laquelle l'antenne (7) est fixée, est un guide d'ondes circulaire court-circuité d'un côté,
- la douille (8, 8') est un prolongement de ce guide d'ondes circulaire et
- la douille (8, 8') et la partie du boîtier, dans laquelle l'antenne (7) est fixée, sont au même potentiel électrique.

6. Transmetteur selon la revendication 5,
**caractérisé en ce**
**que** le diamètre intérieur de la douille (8, 8') est supérieur au diamètre intérieur de la partie de boîtier (11), dans laquelle l'antenne (7) est fixée.

7. Transmetteur selon la revendication 4,
**caractérisé en ce**
**qu'**une bride (72), notamment en polytétrafluoroéthylène (PTFE), est formée contre la douille de protection (9), dans une zone adjacente au boîtier (11).

8. Transmetteur selon la revendication 2,
**caractérisé en ce que**
- la tige émettrice (72) est vissée avec le cylindre plein (71) au moyen d'un filetage,
- le cylindre plein (71) est vissé au moyen d'un filetage avec la section de l'antenne (7) fixée dans le boîtier (11), et
- l'antenne (7) est encastrée ou vissée dans le boîtier (11).

9. Transmetteur selon la revendication 1,
**caractérisé en ce**
**qu'**une section de l'antenne (7) introduite dans la douille (8, 8') est insérée à l'état refroidi dans la douille (8, 8').

10. Transmetteur selon la revendication 4,
**caractérisé en ce**
**que** la douille de protection (9) est engagée à l'état chaud sur la douille (8, 8').
